(19) Europäisches Patentamt

European Patent Office

Office européen des brevets

(11) **EP 2 439 879 A1**

(12) # EUROPEAN PATENT APPLICATION

(43) Date of publication:
**11.04.2012 Bulletin 2012/15**

(21) Application number: **10306100.8**

(22) Date of filing: **08.10.2010**

(51) Int Cl.:
*H04L 12/24* (2006.01)     *H04W 40/24* (2009.01)
*H04L 12/56* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(72) Inventor: **Detay, Jean-Christophe**
**30449, Hannover (DE)**

(74) Representative: **Wetzel, Emmanuelle**
**Alcatel Lucent**
**Intellectual Property & Corporate Standards**
**Lorenzstrasse 10**
**70435 Stuttgart (DE)**

(71) Applicant: **Alcatel Lucent**
**75007 Paris (FR)**

(54) **Method for collecting routing information in a network**

(57)     The invention relates to method for collecting routing information in a network (CN), wherein the network (CN) comprises at least one first network node (GES1, ..., GES5) and at least one second network node (RRH1, ..., RRH8) and wherein the method comprising the steps of receiving routing information stored at the at least first network node (GES1, ..., GES5) for reaching the at least second network node (RRH1, ..., RRH6); verifying, whether the routing information is consistent with respect to a possible change of the topology; and using the routing information for network management purposes, if the routing information has been verified as consistent. The invention further relates to a network node (SV1) performing the method.

*FIG. 1*

**EP 2 439 879 A1**

## Description

The invention relates to a method for collecting routing information in a network and, more particularly but not exclusively, to a packet-switched network.

## BACKGROUND

A topology of a network is a layout pattern of interconnections between various network nodes of the network. The network may be for example a computer network or an indoor communication network using fixed and/or wireless access nodes.

A graph comprising physical locations of the network nodes and physical links between the network nodes describes a physical topology of the network. A mapping of possible data flows between the network nodes determines a logical topology of the network. A configuration of settings in routers or switches of the network may be set in such a way, that data flow between specific network nodes may be not allowed. This means, that the logical topology may differ from the physical topology of the network.

The logical topology determines how data can be transmitted from a first network node of the network to a second network node of the network. In a centralized network using for example a star topology there exists only one transmission path between the first and the second network node. In a distributed network using for example a mesh topology multiple possible transmission paths may exits between the first and the second network node.

A length of the transmission path and a number of network nodes passed on the transmission path determines a transmission time for the data. The transmission time is an amount of time a transmission bit needs to go from the first network as a departure network node via the transmission path to the second network node as a destination network node. A propagation speed depends on a physical medium of a link (e.g. fibre, twisted-pair copper wire, etc.) between two network nodes of the network and is in the range of $2 \cdot 10^8$ meters/sec to $3 \cdot 10^8$ meters/sec which is equal to, or a little less than, the speed of light. In wide-area networks, the transmission time can be in the order of milliseconds. In local-area networks, the transmission time can be in the order of microseconds. The transmission time further depends on a data bandwidth of the link. The transmission time for a specific packet size of the data is given by transmission time = packet size / data bandwidth. The transmission time even further depends on a processing time within the network nodes between an input port of a network node and an output port of the network node. The processing time in Gigabit Ethernet switches (GES = Gigabit Ethernet switch) is for example in a range of several microseconds.

A coverage area of a mobile radio communication system can be extended to an indoor coverage by adding radio remote heads to an existing indoor communication network such as an Ethernet network and by connecting the indoor communication network via a base station interface to a base station of the mobile radio communication system. Gigabit Ethernet switches may be used for an interconnection and a routing of data between the base station interface and the radio remote heads within the indoor communication network.

Usually several of the radio remote heads transmit simultaneously downlink data to a mobile station located within the indoor communication network in a cooperated multipoint transmission to increase a data throughput in the downlink direction. In an uplink direction several of the radio remote heads receive uplink data from the mobile station and the received uplink data will be combined in a simultaneous way to increase the data throughput in the uplink direction.

A synchronization of data transmissions in the downlink direction can be done in a following way: Transmission times for transmission paths between the base station interface and a group of radio remote heads (usually radio remote heads which are located in a same sector of the base station) is determined. A largest transmission time to one of a group of radio remote heads is then used for synchronization across all radio remote heads of the group by adding additional transmission delays to the transmission paths having not the largest transmission time. The additional transmission delays may be obtained for example by using delay loops within the radio remote heads.

## SUMMARY

A network management system (NMS = network management system) periodically checks the logical topology of the network by receiving routing information stored at the switches. The routing information comprises for example a list of MAC addresses (MAC = Media Access Control) and corresponding port numbers of the switches by which the radio remote heads can be reached.

Following problems exist according to the routing information stored at the switches in a so-called MAC address table:

- The switch forgets respectively deletes a specific MAC address at a port of the switch, if there is no data traffic for the specific MAC address for a predefined time.
- The switch does not update immediately the MAC address table, if there is no data traffic for the specific MAC address and if the radio remote head is connected to another port of the switch or to another port of another switch.

Since the indoor communication network usually comprises several switches and the routing information may be not collected simultaneously from all switches it may happen, that a radio remote head seems to be connected to two switches or that a radio remote head suddenly disappears from the indoor communication network.

Depending from the collected routing information and the obtained logical topology the transmission time from the base station interface to a radio remote heads depends for the most part from a number of switches to be passed from the base station interface to the radio remote head. If a radio remote head may be determined to be connected to a wrong switch on a wrong hierarchical level, the transmission time may be estimated too large or too small and the downlink transmission from several radio remote heads and the uplink transmission from the mobile station may be synchronized at least for one radio remote head in a wrong way.

The way of collecting routing information within the network affects a network management of the network.

Therefore, it is an object of the invention to provide an improved collection of routing information within the network.

The object is achieved by a method for collecting routing information in a network. The network comprises one or several first network nodes such as switches and one or several second network nodes such as radio remote heads. The method comprises the steps of receiving routing information stored at the one or several first network nodes for reaching the one or several second network nodes, verifying, whether the routing information is consistent with respect to a possible change of a topology of the network, and using the routing information for network management purposes, if the routing information has been verified as consistent. The object is further achieved by a network node for collecting routing information in a network. The network node may be for example a centralized control network node of the network or one of the first network nodes.

The invention has a first benefit of obtaining a more reliable current logical topology of the network because each received routing information is verified, whether the routing information is realistic and consistent with respect to a known physical and/or logical topology of the network. If the routing information indicates a change from the known physical and/or logical topology it will be checked, whether the change could be possible. The invention has a second benefit of increasing a reliability of the network management by using only verified routing information.

Further advantageous features of the invention are defined and are described in the following detailed description of the invention.

## BRIEF DESCRIPTION OF THE FIGURES

The embodiments of the invention will become apparent in the following detailed description and will be illustrated by accompanying figures given by way of non-limiting illustrations.

Figure 1 shows schematically a block diagram of a communication network according to an embodiment of the invention.
Figure 2 shows schematically a flow diagram of a method according to the embodiment of the invention and further embodiments of the invention.
Figure 3 shows schematically a block diagram of a network node according to an even further embodiment of the invention.

## DESCRIPTION OF THE EMBODIMENTS

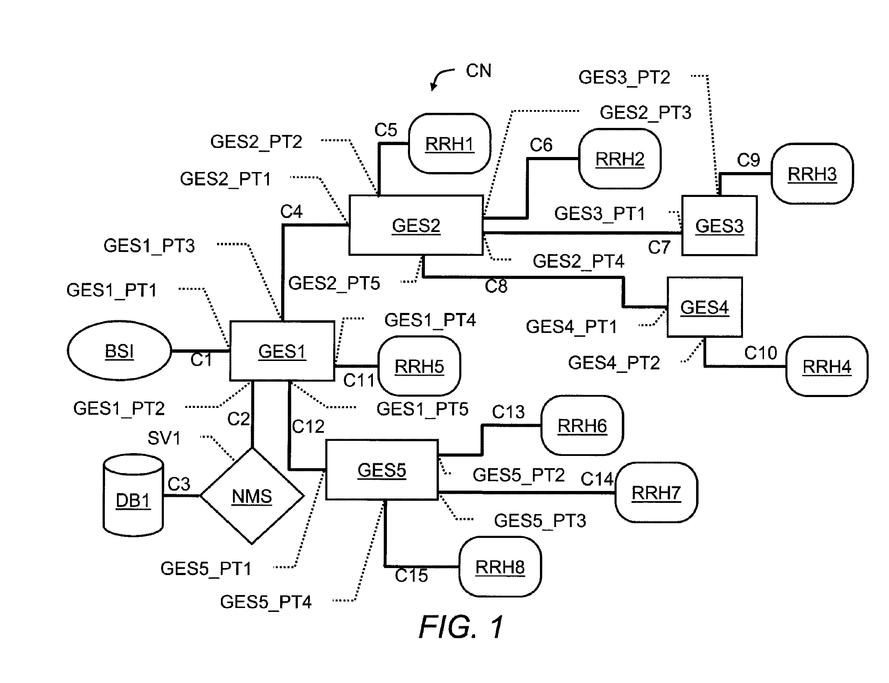

Figure 1 shows schematically a block diagram of a communication network CN according to an embodiment of the invention.

The communication network CN may be for example a wireless local indoor communication network connected to a base station interface BSI of a base station of a global wireless communication system. The base station, the global wireless communication system and mobile stations wirelessly connected to the communication network CN are not shown in Figure 1 for simplification.

In an alternative, the communication network CN may be an indoor communication network connected via one or several routers to further local and/or global communication networks and/or the Internet.

In further alternatives, the communication network CN may be a MAN (MAN = metropolitan area network) or a WAN (WAN = wide area network).

According to the embodiment shown in Figure 1, the base station interface BSI converts downlink RF signals into analogue or digital downlink signals for a transmission over the communication network CN to radio remote heads RRH1 to RRH8 and converts analogue or digital uplink signals into uplink RF signals for a transmission to the base station. This is well-known technology knowledge and therefore needs not to be discussed with further details.

The communication network CN may be located for example in an office building, an exhibition hall, a factory building, a tunnel, a sports hall, an events hall, an airport, a train station, a mine or a road tunnel.

The communication network CN may be for example a local area network based on the Ethernet protocol IEEE 802.3 (IEEE = Institute of Electrical and Electronics Engineers).

In further alternatives, the communication network CN may be based on Token Ring protocol or Token Bus protocol. In an even further alternative, the communication network CN may be for example a next generation home network such as G.hn, which is specified according to physical layer and architecture in ITU Recommendation G.9960 (ITU = International Telecommunication Union).

The exemplarily logical topology of the communication network CN shown in Figure 1 is as follows:

The base station interface BSI is connected by a first connection C1 to a first port GES1_PT1 of a first switch GES1.

A server SV1 may be connected by a second connection C2 to a second port GES1_PT2 of the first switch GES1 and may comprise a network management system NMS. In an alternative, the server SV1 may be not required, if the network management system NMS may be located for example in one of the switches GES1 to GES5.

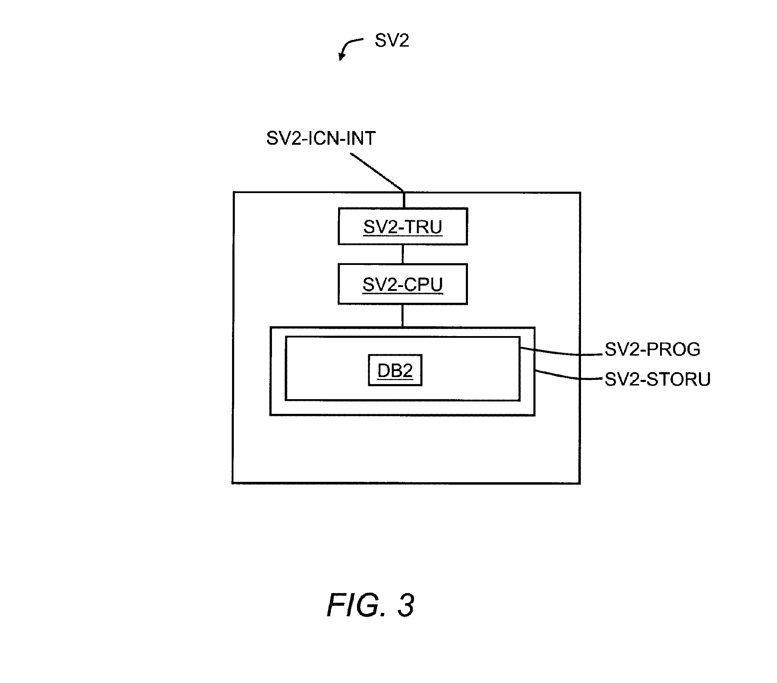

A database DB1 for storing routing information and for providing a topology of the communication network CN may be connected by a third connection C3 to the server SV1 . Alternatively, the network management system NMS may internally comprise the database DB1 (see Figure 3).

A second switch GES2 is connected from a first port GES2_PT1 of the second switch GES2 by a fourth connection C4 to a third port GES1_PT3 of the first switch GES1. A first radio remote head RRH1 is connected by a fifth connection C5 to a second port GES2_PT2 of the second switch GES2. A second radio remote head RRH2 is connected by a sixth connection C6 to a third port GES2_PT3 of the second switch GES2.

A third switch GES3 is connected from a first port GES3_PT1 of the third switch GES3 by a seventh connection C7 to a fourth port GES2_PT4 of the second switch GES2. A fourth switch GES4 is connected from a first port GES4_PT1 of the fourth switch GES4 by an eighth connection C8 to a fifth port GES2_PTS of the second switch GES2.

A third radio remote head RRH3 is connected by a ninth connection C9 to a second port GES3_PT2 of the third switch GES3. A fourth radio remote head RRH4 is connected by a tenth connection C10 to a second port GES4_PT2 of the fourth switch GES4. A fifth radio remote head RRH5 is connected by an eleventh connection C11 to a fourth port GES1_PT4 of the first switch GES1.

A fifth switch GES5 is connected from a first port GESS_PT1 of the fifth switch GES5 by a twelfth connection C12 to a fifth port GES1_PT5 of the first switch GES1.

A sixth radio remote head RRH6 is connected by a thirteenth connection C13 to a second port GES5_PT2 of the fifth switch GES5. A seventh radio remote head RRH7 is connected by a fourteenth connection C14 to a third port GES5_PT3 of the fifth switch GES5. An eighth radio remote head RRH8 is connected by a fifteenth connection C15 to a fourth port GES5_PT4 of the fifth switch GES5.

The switches GES1 to GES5 may be for example Gigabit Ethernet switches. The radio remote heads RRH1 to RRH8 are distributed for example across a building to obtain a contiguous coverage area without any coverage holes. The radio remote heads RRH1 to RRH8 convert analogue or digital downlink signals into downlink RF signals for a downlink transmission to mobile stations and convert uplink RF signals into analogue or digital uplink signals for a transmission over the communication network CN to the base station interface BSI. This is also well-known technology knowledge and therefore needs not to be discussed with further details.

The connections C1 to C15 may use optical fibres such as mono-mode fibres, a twisted pair RF cabling such as based on a CAT5 cable (CAT5 = Category 5), or radio frequency links as a transport medium.

The invention is not limited to the specific network topology exemplarily described above and shown in Figure 1. This means that the base station interface BSI, the switches GES1 to GES5, the network management system NMS, the database DB1 and the radio remote heads RRH1 to RRH8 may be connected in further alternatives by using more or less than fifteen connections. Furthermore, the communication network CN may comprise more or less than five switches and/or more or less than eight radio remote heads.

In further alternatives, IPv4 or IPv6 routers (IPv4 = Internet Protocol version 4, IPv6 = Internet Protocol version 6) may be used instead of the switches GES1 to GES5.

Alternatively, the communication network CN does not comprise the base station interface BSI and comprises instead of the radio remote heads RRH1 to RRH8 several access points for providing a wireless local area network according to one standard of the IEEE 802.11 standard family (e.g. IEEE 802.11a, IEEE 802.11g).

In further alternatives, the communication network CN does not comprise any wireless access nodes such as the radio remote heads RRH1 to RRH8 but comprises computers, notebooks or IP telephones as terminals of the communication network CN.

The invention will now be explained by a specific application of the invention according to the embodiment exemplarily shown in Figure 1.

As already explained in the summary section, the network management system NMS periodically checks the logical topology of the communication network CN and calculates transmission times for downlink signals from the base station interface BSI to the radio remote heads RRH1 to RRH8 by using the routing information received from the switches GES1 to GES5.

The routing information can be provided to the network management system NMS in different ways. The network management system NMS may periodically poll the routing information from the switches GES1 to GES5 by exchanging request and answer messages for example by applying a 3 minute period. The request message transmitted to one of the switches GES1 to GES5 requests MAC addresses for all ports stored at the requested switch GES1, ..., GES5. In an alternative also the port status such as "Enabled" or "Disabled" may be requested. The requested switch GES1, ..., GES5 transmits in the answer message the routing information for those ports, which have MAC addresses currently allocated.

In an alternative, the switches GES1 to GES5 periodically report the routing information to the network management system NMS by applying a 1 minute period without requiring a previous request message. In a further alternative, a switch GES1, ..., GES5 transmit the routing information to the network management system NMS, if the routing information has been changed at the switch GES1, ..., GES5. Preferably, only the changed routing information is transmitted from the switch GES1, ..., GES5 to the network management system NMS.

According to the embodiment shown in Figure 1, following routing information may be reported:

The first switch GES1 may report depending on a specific time period since data has been received from or transmitted to a specific MAC address lastly:

- MAC address of base station interface BSI at the first port GES1_PT1
- MAC address of the server SV1 at the second port GES1_PT2
- MAC addresses of the second switch GES2, of the first radio remote head RRH1, of the second radio remote head RRH2, of the third switch GES3, of the third radio remote head RRH3, of the fourth switch GES4 and of the fourth radio remote head RRH4 at the third port GES1_PT3
- MAC address of the fifth radio remote head RRH5 at the fourth port GES1_PT4
- MAC addresses of the fifth switch GES5, of the sixth radio remote head RRH6, of the seventh radio remote head RRH7 and of the eighth radio remote head RRH8 at the fifth port GES1_PT5

The second switch GES2 may report depending on a specific time period since data has been received from or transmitted to a specific MAC address lastly:

- MAC addresses of the base station interface BSI and of the server SV1 at the first port GES2_PT1
- MAC address of the first radio remote head RRH1 at the second port GES2_PT2
- MAC address of the second radio remote head RRH2 at the third port GES2_PT3
- MAC addresses of the third switch GES3 and of the third radio remote head RRH3 at the fourth port GES2_PT4
- MAC addresses of the fourth switch GES4 and of the fourth radio remote head RRH4 at the fifth port GES2_PT5

The third switch GES3 may report depending on a specific time period since data has been received from or transmitted to a specific MAC address lastly:

- MAC addresses of the base station interface BSI and of the server SV1 at the first port GETS3_PT1
- MAC address of the third radio remote head RRH3 at the second port GES3_PT2

The fourth switch GES4 may report depending on a specific time period since data has been received from or transmitted to a specific MAC address lastly:

- MAC addresses of the base station interface BSI and of the server SV1 at the first port GES4_PT1
- MAC address of the fourth radio remote head RRH4 at the second port GES4_PT2

The fifth switch GES5 may report depending on a specific time period since data has been received from or transmitted to a specific MAC address lastly:

- MAC addresses of the base station interface BSI and of the server SV1 at the first port GES5_PT1
- MAC address of the sixth radio remote head RRH6 at the second port GES5_PT2
- MAC address of the seventh radio remote head RRH7 at the third port GES5_PT3
- MAC address of the eighth radio remote head RRH8 at the fourth

port GES5_PT4

The Spanning Tree Protocol (STP = Spanning Tree Protocol) based on IEEE 802.D or the Rapid Spanning Tree Protocol (RSTP = Rapid Spanning Tree Protocol) based on IEEE 802.D-2004 can be used to determine a hierarchical level for each switch GES1 to GES5 in the communication network CN. The hierarchical level depends on path cost from the switches GES1, ..., GES5 to a central point (called root bridge in STP) in the communication network CN, which may be the first switch GES1 according to the embodiment shown in Figure 1. The path cost depends for example on a distance to the root bridge and on a transmission capacity of a link to the root bridge. For determining the hierarchical levels of the switches GES1, ..., GES5 for example an object ID called "stpRootCost" of a source code of the SPT can be readout. The hierarchical level may be calculated for example by using the equation:

$$HL = floor(20000 / stpRootCost) + 1$$

The hierarchical level HL is obtained, by rounding down with the floor function to a largest integer value that does not exceed $20000/stpRootCost$. The hierarchical levels obtained by using STP and the equation are as follows:

Table 1

| Switch | Hierarchical level |
|--------|--------------------|
| GES1 | 1 |
| GES2 | 2 |
| GES3 | 3 |
| GES4 | 3 |
| GES5 | 2 |

The hierarchical levels of the switches GES1, ..., GES5 may be stored in the database DB1 or a further database.
The routing information collected and received at the network management system NMS is verified according to various rules and requirements given below and parts of the routing information such as switch number, port number and MAC address may be stored in the database DB1 (see following table 2). In a first alternative, the database DB1 may comprise MAC addresses for the radio remote heads RRH1 to RRH8. In a second alternative, the database DB1 may further comprise the MAC addresses for the base station interface BSI and/or the server SV1.
If routing information of a same radio remote head RRH1, ..., RRH8 is received from two or mores switches GES1, ..., GES5, the routing information will be stored at the database DB1 only for the switch with a largest hierarchical level. If for example routing information for the second radio remote head RRH2 is received from the first switch GES1 (with hierarchical level 1) and the second switch GES2 (with hierarchical level 2) only the routing information received from the second switch GES2 will be stored at the database DB1.
Equally, if routing information of the base station interface BSI and or the server SV1 is received from two or mores switches GES1, ..., GES5, the routing information will be stored at the database DB1 only for the switch with a smallest hierarchical level. If for example routing information for the base station interface BSI is received from the first switch GES1 (with hierarchical level 1) and the second switch GES2 (with hierarchical level 2) only the routing information received from the first switch GES1 will be stored at the database DB1.
MAC addresses of ports of the switches GES1, ..., GES5 may be known at the network management system NMS. MAC addresses received with the routing information may be compared with the known MAC addresses of the ports of the switches GES1, ..., GES5. If such a MAC address appears in the routing information it may be not stored in the database DB1. Therefore, following routing information may be stored at the database DB1 according to the basic rules given above:

Table 2

| Switch | MAC addresses of network nodes | Port of switch |
|--------|-------------------------------|----------------|
| GES1 | BSI_MAC | GES1_PT1 |
| GES1 | SV1_MAC | GES1_PT2 |
| GES1 | RRH5_MAC | GES1_PT4 |

(continued)

| Switch | MAC addresses of network nodes | Port of switch |
|--------|-------------------------------|----------------|
| GES2 | RRH1_MAC | GES2_PT2 |
| GES2 | RRH2_MAC | GES2_PT3 |
| GES3 | RRH3_MAC | GES3_PT2 |
| GES4 | RRH4_MAC | GES4_PT2 |
| GES5 | RRH6_MAC | GES5_PT2 |
| GES5 | RRH7_MAC | GES5_PT3 |
| GES5 | RRH8_MAC | GES5_PT4 |

From table 2 it can be deduced, which radio remote head RRH1, ..., RRH8 is directly connected to which switch GES1, ..., GES8. From table 1 it can be deduced, which switch GES1, ..., GES5 is on which hierarchical level. By ignoring any transmission times via the connections C1, C4 to C15 and assuming for example a processing time of 3 microseconds for downlink data between input and output ports of the switches GES1, ..., GES8, downlink transmission times from an output port of the base station interface BSI to an input port of one of the radio remote heads RRH1, ..., RRH8 can be calculated by following equation:

$$TT(RRH) = HL(switch(RRH)) \bullet 3\mu s$$

This results in following downlink transmission times TT:

Table 3

| Radio remote head (RRH) | Downlink Transmission time (TT) $[\mu s]$ |
|-------------------------|-------------------------------------------|
| RRH1 | 6 |
| RRH2 | 6 |
| RRH3 | 9 |
| RRH4 | 9 |
| RRH5 | 3 |
| RRH6 | 6 |
| RRH7 | 6 |
| RRH8 | 6 |

Assuming that all the radio remote heads RRH1, ..., RRH8 are allocated in a same sector of the base station, a largest downlink transmission time *LTT* of a radio remote head or a group of radio remote heads (RRH3 and RRH4 according to Figure 1) determines, which additional transmission time delay *ATTD* must be added to the downlink transmission times of radio remote heads *TT*(*RRH*) having a smaller downlink transmission time than the largest downlink transmission time *LTT* according to following exemplarily equation:

$$ATTD = LTT - TT(RRH)$$

Thereby, the downlink transmission times for the radio remote heads RRH1 to RRH8 can be equalized. The additional transmission time delay may be provided for example by additional processing loops in the radio remote heads RRH1, RRH2, RRH5 to RRH8. Alternatively, the additional processing lopes may be applied by the base station interface BSI or the switches GES1 to GES5. Using this equalization of downlink transmission times between the base station interface BSI and the radio remote heads RRH1 to RRH8 downlink signals can be transmitted from the radio remote heads RRH1 to RRH8 simultaneously by a MIMO transmission scheme (MIMO = multiple input multiple output) to the mobile stations located within the coverage areas of the radio remote heads RRH1 to RRH8,

Preferably for all radio remote heads RRH1 to RRH8 a small further additional transmission time delay may be added to the downlink transmission time to get rid of a data packet jitter induced by varying processing time in the switches GES1 to GES5 and the radio remote heads RRH1 to RRH8 and by congestion on the connections C1 to C15.

For a synchronisation in the uplink direction from the radio remote heads RRH1 to RRH8 to the base station interface BSI, an uplink transmission time may be set equal to the corresponding downlink transmission time.

If one of the radio remote heads RRH1 to RRH8 combines uplink packets of a group of two or more radio remote heads to a single uplink packet before forwarding the single packet to the base station interface BSI, the uplink transmission time can be larger than the downlink transmission time because of the processing time in the radio remote head and an additional processing delay for the combination in the radio remote head will be used to determine an overall uplink transmission time for the group of radio remote heads.

The base station interface BSI converts downlink RF signals with a fixed sampling rate SR into downlink data packets independently from any downlink data traffic. The base station interface BSI inserts to every downlink data packet a time stamp, which may be a simple counter. The counter is incremented for every new downlink data packet. Likewise, the radio remote heads RRH1 to RRH8 convert uplink RF signal with the same fixed sampling rate into uplink data packets independently from any uplink traffic. Each of the radio remote heads RRH1 to RRH8 extract the time stamp from a received downlink data packet after the specific additional transmission time delay (and the further additional transmission time delay) has (have) been expired and insert the time stamp to next uplink data packets.

The base station interface BSI combines uplink data packet belonging to a same RF uplink signal in a following way:

For a downlink data packet with a time stamp of 10000 for example corresponding uplink data packets from the radio remote heads RRH3 and
RRH4 reusing the time stamp of 10000 will be received between a shortest and a largest uplink transmission time at the base station interface BSI.

Using the difference between the largest and the shortest uplink transmission time determined at the network management system NMS, the base station interface BSI knows how long it must wait for the slowest uplink data packets comprising the same time stamp of 10000 as the fastest uplink data packet(s). If this time has expired, the base station interface BSI combines all the uplink data packets comprising the time stamp of 10000 received and collected so far. If a further uplink data packet comprising the time stamp of 10000 arrives at a later point of time at the base station interface BSI, the further uplink data packet will be discarded.

Thereby, the synchronization of the uplink data packets from the radio remote heads RRH1 to RRH8 can be achieved at the base station interface BSI and the base station interface BSI can combine uplink data packets comprising a same information and can convert the uplink data packets to an RF signal to be transmitted to the base station.

By storing the routing information at the database DB1, following problem can be avoided:

The equalization of the transmission times and the simultaneous transmission are disrupted, because MAC address tables for the ports GES1_PT1, ..., GESS_PT3 at the switches GES1, ..., GES5 are refreshed, if data have not been received from or transmitted to a specific MAC address for a specific time period (e.g. 3 minutes). By this refreshing the specific MAC address is deleted. The MAC address tables are refreshed at the switches GES1 to GES8 at different times. Thereby, it may happen for example, if the database DB1 comprising the routing information would be not available and if only the routing information currently reported from the switches GES1 to GES5 is used for network management purposes, that the second switch GES2 has refreshed the MAC address table for the second port GES2_PT2 before transmitting the routing information of its ports GES2_PT1, ..., GES2_PT4, because there was no data traffic to and/or from the second radio remote head RRH2. The first switch GES1 may transit at the same time the routing information of its ports GES1_PT1, ..., GES1_PT5 and may refresh the MAC address table for the third port GES1_PT3 at a later point of time. In this case, it seems to be that the second radio remote head RRH2 is directly connected to the first switch GES1 because no other switch on a higher level has reported routing information for the second radio remote head RRH2. Thereby, the transmission time between the base station interface BSI and the second radio remote RRH2 would be determined as too small and the additional transmission time delay would be determined as too large with the result, that data are transmitted from the second radio remote head RRH2 at a later point of time, than the data being transmitted from the other radio remote heads RRH1, RRH3 to RRH8.

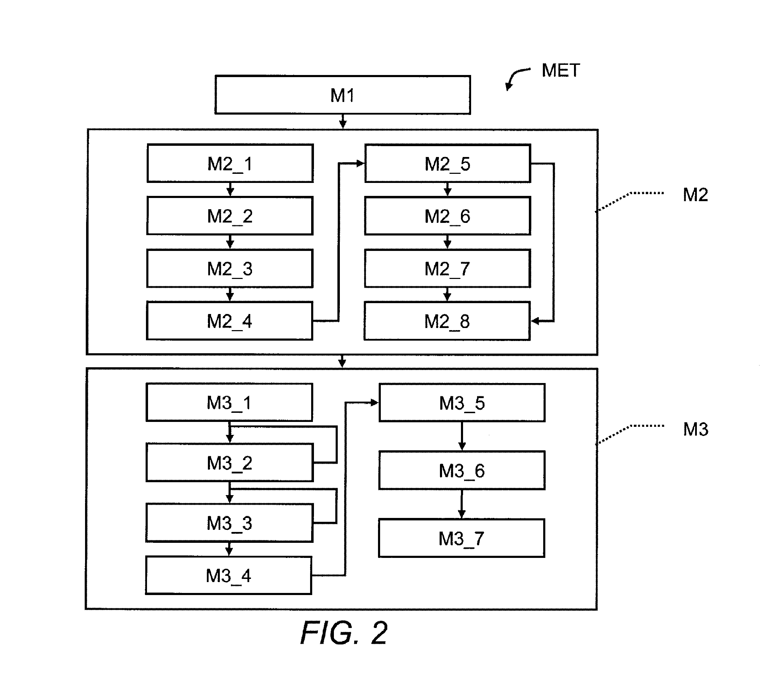

For avoiding further errors according to a determination of the topology of the communication network CN, instead of simply storing any received routing information in the database DB1, a method MET as shown schematically in Figure 2 by a block diagram may be applied for performing a verification of the received routing information.

The sequence and the number of the steps for performing the method MET is not critical, and as can be understood by those skilled in the art, that the sequence and the number of the steps may vary without departing from the scope of the invention, e.g. some of the steps may be performed simultaneously, some of the steps may be alternative steps, or some of the steps may be ignored.

In a first main step M1, the routing information stored at one of the switches GES1, ..., GES5 for reaching one or several of the radio remote heads RRH1, ..., RRH8 is collected and received at the network management system NMS. The routing information may be received by using one of the alternatives given above according to Figure 1. In an alternative, the method MET may be executed by a processing entity separated from the network management system NMS.

In a second main step M2, the network management system NMS verifies, whether the received routing information is consistent with respect to a possible change of the topology of the communication network CN.

In a first sub-step M2_1, the network management system NMS predefines two or more hierarchical levels for the topology of the communication network CN. The network management system NMS may for example sort the MAC addresses received with the routing information into two categories. The first category belongs to MAC addresses, which have been reported for a port having only a single MAC address allocated. For the first category it is assumed, that the MAC address is allocated to a port of a switch GES1, ..., GES5, which is directly connected to a radio remote head RRH1, ..., RRH8.

The second category belongs to MAC addresses, which have been reported for a port having two or more MAC addresses allocated. For the second category it is assumed, that the MAC address is allocated to a port of a switch GES1, ..., GES5, which is not directly connected to a radio remote head RRH1, ..., RRH8. This means that the port of the switch GES1, ..., GES5 is assumed to be connected to a port of a further switch GES1, ..., GES5. The second category is preferably predefined in a further sub-step M2_2 as an intermediate hierarchical level of the topology of the communication network CN.

In a further sub-step M2_3, the network management system NMS classifies the routing information with respect to the two categories. If the MAC address is classified to the second category, the MAC address may be not further verified and the routing information may be immediately used in a third main step M3. If the MAC address is classified to the first category, the MAC address may be further verified according to one or several requirements of the topology of the communication network CN. Requirements of the topology may be for example:

- A radio remote head RRH1, ..., RRH8 can only be connected to one port of one switch GES1, ..., GES8 at a same time.
- A switch GES1, ..., GES8 can only have one radio remote head
  RRH1, ..., RRH8 directly connected to one of its port at a same time.

In a preferred embodiment, the network management system NMS compares in a next sub-step M2_4 the received routing information with further routing information for reaching the one or the several radio remote heads RRH1, ..., RRH8 and wherein the further routing information is stored in the database DB1.

The network management system NMS may update the database DB1 in a further sub-step M3_1 of a third main step M3 with the received routing information, if the routing information has been verified as consistent. Preferably, the updating step M3_1 is performed directly, if the routing information is classified to the intermediate hierarchical level. If the routing information may be not classified to the intermediate hierarchical level, the updating step M3_1 is performed, if the routing information fulfils the one or the several requirements of the topology of the communication network CN given above.

For checking whether the routing information fulfils the one or the several requirements following sub-steps M2-5 to M2_8 may be performed by the network management system NMS:

In a further sub-step M2_5, the network management system NMS checks, whether the MAC address of the routing information is already stored in the database DB1 or not stored in the database DB1.

If the MAC address is already stored in the database DB1, the network management system NMS checks in a next sub-step M2_6, to which of the switches GES1, ..., GES5 the MAC address is already allocated and checks in a further sub-step M2_7, to which port the MAC address is already allocated.

The network management system NMS may check in a next sub-step M2_8, if one or several further MAC addresses are already allocated to the port, which has been determined in the sub-step M2_7.

By performing the sub-steps M2_5 to M2_8 with respect to the requirements of the topology given above, it will be decided, whether the routing information stored in the database DB1 will be updated or not updated.

In the third main step M3, the network management system NMS uses the routing information for network management purposes, if the routing information has been verified as consistent. Network management purposes may be for example the transmission time determination between the base station interface BSI and the radio remote heads RRH1 to RRH8 as described above. Another network management purpose may be for example to obtain a current operation condition of the communication network CN. If for example no data are received in an uplink direction from one of the radio remote heads RRH1, ..., RRH8 for a specific time period such as 1 hour or 5 hours during business time in an office building, it can be presumed that this radio remote head does not work anymore and may therefore cause a coverage hole within the office building.

Preferably, the network management system NMS determines in a sub-step M3_2 based on the routing information contained in the database DB1 a number of intermediate switches GES1, ..., GES5 for a shortest communication link between the base station interface BSI as a central point of the communication network CN and one of the radio remote heads RRH1, ..., RRH8, The sub-step M3_2 is preferably repeated for all radio remote heads RRH1 to RRH8 of the communication network CN allocated to a same sector of the base station.

Then, the network management system NMS determines in a further sub-step M3_3 the transmission time between the base station interface BSI and the one of the radio remote heads RRH1, ..., RRH8 based on the number of the intermediate switches determined in the sub-step M3_2.

The sub-step M3_3 is preferably repeated for the same radio remote heads RRH1 to RRH8 as applied to in the previous sub-step M3_2.

In a next sub-step M3_4, the network management system determines the largest transmission time.

In a further step M3_5, the network management system NMS determines additional transmission time delays for all radio remote heads RRH1 to RRH8 of the communication network CN as described above according to Figure 1.

In a next step M3_6, the network management system NMS configures the communication network CN by transmitting the additional transmission time delays for the downlink direction to the radio remote heads RRH1 to RRH8 and transmits a largest additional transmission time delay with respect to a shortest uplink transmission time to the base station interface BSI.

In a further step M3_7, each of the radio remote heads RRH1 to RRH8 uses the received additional transmission time delay for synchronization in the downlink direction and the base station interface BSI uses the received addition transmission time delays for synchronization of data packets comprising the same time stamp and received at the base station interface BSI within the largest additional transmission time delay.

By updating the routing information at the database DB1 according to the rules given above, following further problem can be avoided:

The sixth radio remote head RRH6 may be reconnected logically or physically within a short time (shorter than the refresh time at the switches GES1, ..., GES8) for example from the fifth switch GES5 to a further port of the first switch GES1. In that case, both the fifth switch GES5 and the first switch GES1 will report routing information according to the MAC address of the sixth radio remote head RRH6 to the network management system NMS (see step M1 in Figure 2). If the received routing information would be immediately used to update the database DB1, two entries for the sixth radio remote head RRH6 would appear in the database DB1 and the transmission time for the sixth radio remote head RRH6 cannot be determined in the sub-step M3_3 unambiguously. Using the verification sub-steps M2_1 to M2_8 allows to update the routing information received from the first switch GES1 and to delete at a same time the routing information received from the fifth switch GES5. This can be done for example by giving the routing information for the MAC address of the sixth radio remote head RRH6 received from the first switch GES1, which is new in comparison to the routing information stored at the database DB1 for the first switch GES1 a higher priority than the routing information for the MAC address of the sixth radio remote head RRH6 received from the fifth switch GES5, which is identical to the routing information stored at the database DB1 for the fifth switch GES5.

Referring to Figure 3, a block diagram of a network node SV2 according to an even further embodiment of the invention is schematically shown. The network node SV2 may be similar as the network node SV1 shown in Figure 1 but comprises instead of the external database DB1 an internal database DB2.

The network node SV2 may comprise an interface SV2-ICN-INT for connecting the network node SV2 to the communication network CN, a transceiver unit SV2-TRU connected to the interface SV2-ICN-INT, a CPU (CPU = central processing unit) SV2-CPU and a computer readable storage unit SV2-STORU.

The network node SV2 may be a separate network node as shown in Figure 1 or the functions of the network node SV2 may implemented in one of the switches GES1, ..., GES5 or in the base station interface BSI.

If the network node SV2 may be one of the switches GES1, ..., GES5 the network node SV2 comprises at least one further interface and one further transceiver (not shown for simplification).

The transceiver unit SV2-TRU is adapted to request the routing information from the switches GES1, ..., GES5 and is adapted to receive the routing information from the switches GES1, ..., GES5.

The computer readable storage unit SV2-STORU is foreseen for storing a computer readable program SV2-PROG and may comprise optionally the internal database DB2 for storing the routing information and/or the information of the hierarchical levels of the switches GES1 to GES5.

The computer readable program SV2-PROG is foreseen for executing respective steps of the method MET shown in Figure 2.

In particular, the computer readable program SV2-PROG comprises means for verifying, whether the routing information is consistent with respect to a possible change of the topology of the communication network CN and for using the routing information for network management purposes, if the routing information has been verified as consistent. Preferably, the computer readable program SV2-PROG comprises further means for managing the communication network CN.

The CPU SV2-CPU is foreseen for executing the computer readable program SV2-PROG.

**Claims**

1. A method for collecting routing information in a network (CN), said network (CN) comprises at least one first network node (GES1, ..., GES5) and at least one second network node (RRH1, ..., RRH2), said method comprising the steps of:

   - receiving (M1) said routing information stored at said at least first network node (GESI , ..., GES5) for reaching said at least second network node (RRH1, ..., RRH2);
   - verifying (M2), whether said routing information is consistent with respect to a possible change of a topology of said network (CN); and
   - using (M3) said routing information for network management purposes, if said routing information has been verified as consistent.

2. Method according to claim 1, wherein said verifying step (M2) comprises the steps of predefining (M2_1) at least two hierarchical levels for said topology and classifying (M2_3) said routing information with respect to said at least two hierarchical levels and wherein said using step (M3) depends on a classification result of said classifying step.

3. Method according to any of the preceding claims, wherein said verifying step (M2) further comprises comparing (M2_4) said routing information with further routing information for reaching said at least second network node (RRH 1, ..., RRH2) stored in a database (DB1, DB2) and wherein said using step comprises updating (M3_1) said database (DB1, DB2) with said routing information, if said routing information has been verified as consistent.

4. Method according to claim 2 and claim 3, wherein said verifying step (M2) further comprises the step of predefining (M2_2) one of said at least two hierarchical levels as an intermediate hierarchical level of said topology; wherein said updating step (M3_1) is performed directly, if said routing information is classified to said intermediate hierarchical level or if said routing information is not classified to said intermediate hierarchical level said updating step (M3_1) is performed, if said routing information fulfils at least one requirement for said topology.

5. Method according to claim 4, wherein said routing information comprises a routing address of said at least second network node (RRH1, RRH22) and a port number of said at least first network node (GES1, ..., GES5) and wherein said verifying step (M2) further comprises either of the following:

   - checking (M2_5), whether said routing address is stored or not stored in said database (DB1, DB2);
   - checking (M2_6), if said routing address is already stored in said database (DB1, DB2), to which at least first network node (GES1, ..., GES5) said routing address is already allocated;
   - checking (M2_7), if said routing address is already stored in said database (DB1, DB2), to which port number said routing address is already allocated;
   - checking (M2_8), if at least one further routing address is already allocated to said port number.

6. Method according to any of the claims 4, 5, wherein said at least one requirement is either of the following:

   - said at least second network node (RRH1, ..., RRH2) can only be connected to one port of said at least first network node (GES1, ..., GES5) at a same time;
   - said at least first network node (GES1, ..., GES8) can have only one at least second network node (RRH1, ..., RRH8) directly connected to a port (GES1_PT1, ..., GES5_PT4) of said at least first network node (GES1, ..., GES8) at said same time.

7. Method according to any of the preceding claims, wherein said method is performed by a centralized control network node (SV1, SV2) of said network (CN) or one of said at least first network node (GES1, ..., GES5).

8. Method according to any of the preceding claims, wherein said routing information is periodically reported from said at least first network node (GES1, ..., GES5) or is transmitted by said at least first network node (GES1, ..., GES5), if said routing information has been changed at said at least first network node (GES1, ..., GES5).

9. Method according to any of the preceding claims, wherein said using step (M3) further comprises the steps of:

   - determining (M3_2) based on said database (DB1, DB2) a number of said at least first network node (GES1, ..., GES5) for a fastest communication link between a central point of said network (CN) and said at least second network node (RRH1, ..., RRH2);
   - determining (M3_3) a transmission time between said central point and said at least second network node (RRH1, ..., RRH2) based on said determined number of intermediate network nodes;
   - repeating said determining steps (M3_2, M3_3) for at least one further of said at least second network node (RRH1, ..., RRH2) for determining at least one further transmission time;
   - determining (M3_4) a largest transmission time;
   - equalizing (M3_5) said transmission time and said at least one further transmission time to said largest transmission time.

10. Method according to any of the preceding claims, wherein said network (CN) is an Ethernet network and wherein said at least first network node (GES1, ..., GES5) is an Ethernet switch.

11. Method according to any of the preceding claims, wherein said network (CN) is an indoor communication network.

12. Method according to any of the preceding claims, wherein said network (CN) is connected to a base station via a base station interface (BSI) and wherein said at least second network node (RRH1, ..., RRH2) is a radio remote head.

13. Network node (SV1, SV2, GES1, ..., GES5) for collecting routing information in a network (CN) comprising:

   - means (SV2-ICN-INT, SV2-TRU) for receiving routing information stored at least a first network node (GES1, ..., GES5) of said network (CN) for reaching at least a second network node (RRH1, ..., RRH2) of said network (CN);
   - means (SV2-CPU, SV2-PROG) for verifying, whether said routing information is consistent with respect to a possible change of said topology; and
   - means (SV2-CPU, SV2-PROG) for using said routing information for network management purposes, if said routing information has been verified as consistent.

14. Network node (SV1, SV2, GES1, ..., GES5) according to claim 13, wherein said network node is a centralized control network node (SV1, SV2) of said network (CN) or one of said at least first network node (GES1, ..., GES5).

*FIG. 1*

MET

M1

M2

M2_1 → M2_2 → M2_3 → M2_4

M2_5 → M2_6 → M2_7 → M2_8

M3

M3_1 → M3_2 → M3_3 → M3_4

M3_5 → M3_6 → M3_7

*FIG. 2*

EP 2 439 879 A1

SV2

SV2-ICN-INT

SV2-TRU

SV2-CPU

SV2-PROG

DB2

SV2-STORU

FIG. 3

Europäisches Patentamt

European Patent Office

Office européen des brevets

**EUROPEAN SEARCH REPORT**

Application Number

EP 10 30 6100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 777 357 A2 (NCR INT INC [US]) 4 June 1997 (1997-06-04) * column 1, line 37 - column 2, line 25; figure 2 * * column 4, line 50 - column 5, line 2 * * column 8, line 18 - column 9, line 23; figure 7 * ----- | 1-14 | INV. H04L12/24 H04W40/24 ADD. H04L12/56 |
| X | TAO WAN ET AL: "S-RIP: A Secure Distance Vector Routing Protocol", 15 May 2004 (2004-05-15), APPLIED CRYPTOGRAPHY AND NETWORK SECURITY; [LECTURE NOTES IN COMPUTER SCIENCE;;LNCS], SPRINGER-VERLAG, BERLIN/HEIDELBERG, PAGE(S) 103 - 119, XP019008023, ISBN: 978-3-540-22217-0 | 1,7, 10-14 | |
| A | * page 103, paragraph Abstract - page 105, paragraph 1. Overview; figure 1 * * page 110, paragraph 5. Secure Routing Information Protocol (S-RIP) - page 112, paragraph 5.1 S-RIP * ----- | 2-6,8,9 | |
| X | BUTLER K ET AL: "A Survey of BGP Security Issues and Solutions", PROCEEDINGS OF THE IEEE, IEEE. NEW YORK, US, vol. 98, no. 1, 1 January 2010 (2010-01-01), pages 100-122, XP011298700, ISSN: 0018-9219 | 1,13 | TECHNICAL FIELDS SEARCHED (IPC) H04L H04W |
| A | * page 112, paragraph 2) Secure Origin BGP - page 113, paragraph 2) Secure Origin BGP; figure 5 * ----- | 2-12,14 | |

-/--

The present search report has been drawn up for all claims

| Place of search | Date of completion of the search | Examiner |
|---|---|---|
| Munich | 3 March 2011 | Fischer, Erik |

EPO FORM 1503 03.82 (P04C01)

Europäisches
Patentamt

European
Patent Office

Office européen
des brevets

**EUROPEAN SEARCH REPORT**

Application Number

EP 10 30 6100

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FEAMSTER N., BALAKRISHNAN H., REXFORD J., SHAIKH A., VAN DER MERWE J.: "The Case for Separating Routing from Routers", ACM, 2 PENN PLAZA, SUITE 701 - NEW YORK USA, 3 September 2004 (2004-09-03), XP040008004, | 1,7, 10-14 | |
| A | * page 5, paragraph Abstract; figure 1 * * page 8, paragraph 4. Routing Control Platform - page 10, paragraph 4.3 Redefinition of Inter-AS Routing; figures 4,5 * | 2-6,8,9 | |

-----

|  | TECHNICAL FIELDS SEARCHED (IPC) |
|---|---|

The present search report has been drawn up for all claims

| Place of search | Date of completion of the search | Examiner |
|---|---|---|
| Munich | 3 March 2011 | Fischer, Erik |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 10 30 6100

This annex lists the patent family members relating to the patent documents cited in the above-mentioned European search report.
The members are as contained in the European Patent Office EDP file on
The European Patent Office is in no way liable for these particulars which are merely given for the purpose of information.

03-03-2011

| Patent document cited in search report | | Publication date | Patent family member(s) | | Publication date |
|---|---|---|---|---|---|
| EP 0777357 | A2 | 04-06-1997 | DE | 69634928 D1 | 18-08-2005 |
| | | | DE | 69634928 T2 | 24-05-2006 |
| | | | JP | 3765138 B2 | 12-04-2006 |
| | | | JP | 9186688 A | 15-07-1997 |
| | | | US | 5710885 A | 20-01-1998 |

EPO FORM P0459

For more details about this annex : see Official Journal of the European Patent Office, No. 12/82